# FASCICULE DE BREVET EUROPEEN

(11) **EP 4 061 610 B1**
(45) Date de publication et mention de la délivrance du brevet: **02.08.2023**
(21) Numéro de dépôt: 20797138.3
(22) Date de dépôt: 02.11.2020
(51) Int. Cl.: B29C 53/60, B29C 53/84, B29C 53/58

(54) **PROCÉDÉ DE FABRICATION D'UN RÉSERVOIR COMPOSITE DE FLUIDE SOUS PRESSION**
VERFAHREN ZUR HERSTELLUNG EINES ZUSAMMENGESETZTEN DRUCKFLÜSSIGKEITSBEHÄLTERS
METHOD FOR MANUFACTURING A COMPOSITE PRESSURIZED-FLUID VESSEL

(30) Priorité: 20.11.2019 FR 1912927
(43) Date de publication de la demande: 28.09.2022
(73) Titulaire: L'Air Liquide, société anonyme pour l'Étude et l'Exploitation des procédés Georges Claude, 75007 Paris (FR)
(72) Inventeur: PAPIN, Philippe, 78350 Les Loges-en-Josas (FR)
(74) Mandataire: Air Liquide
(86) Numéro de dépôt international: PCT/EP2020/080624
(87) Numéro de publication internationale: WO 2021/099094

(56) Documents cités:
- FR-A1- 3 037 633
- FR-A1- 3 076 594

## Description

L'invention concerne un procédé de fabrication d'un réservoir composite de fluide sous pression.

L'invention concerne plus particulièrement un procédé de fabrication d'un réservoir composite de fluide sous pression comprenant une étape de bobinage d'une première bande à base de résine polyoléfine pour former une première couche du réservoir comprend une étape de dépôt, sur la première couche, d'une seconde couche intermédiaire, constituée d'un matériau ayant des propriétés de perméabilité variable en fonction de la température et notamment une perméabilité en dessous d'une température seuil déterminée et une non-perméabilité au-dessus de la température seuil, le procédé comprenant, une étape de bobinage, sur la seconde couche intermédiaire, d'une seconde bande à base de résine pour former une troisième couche. L'invention concerne des réservoirs composites thermoplastiques fabriqués à partir de bandes renforcées avec des résines polyoléfine. Dans certaines applications, il est nécessaire de relier la surface extérieure du réservoir divers à éléments tels que, par exemple, des supports ou accessoires.

Les résines polyoléfine telles que, par exemple, le polybutène-1, polyéthylène, polypropylène, sont peu adaptées à assurer une liaison avec une couche supplémentaire lors de la fabrication du réservoir.

Les résines polyoléfine ont en effet une structure chimique assez stable (structure électronique extérieure très stable). Par conséquent, il est assez difficile de faire une liaison chimique (liaison structurelle) pour lier cette résine à une autre couche ou matériau.

Il existe des techniques pour surmonter ce problème. Pour améliorer l'aptitude à la liaison d'une telle résine avec une autre couche ou matériau, il est connu par exemple de prévoir une attaque chimique de la surface du matériau, un traitement plasmatique (par exemple du type « Matis »), un traitement à la flamme, une abrasion de surface. L'objectif de ces solutions est de modifier la chimie de la couche de surface pour permettre une liaison chimique avec une colle.

Certaines colles donnent de très bons résultats d'adhésion sur les résines polyoléfine mais ont un temps d'ouverture très court (colles de type cyanoacrylate comme la DP 8005 de 3M notamment). Ces colles peuvent en outre générer des problèmes de santé. D'autres colles doivent être appliquées selon un protocole très spécifique et délicat pour montrer la meilleure résistance de la liaison. Cela rend la qualité de collage dépendante de l'opérateur (température pour appliquer la colle, rapport précis pour les composants de la colle, taux d'humidité, épaisseur de colle, ...).

Ces solutions connues ne donnent cependant pas le résultat attendu dans le temps. On peut observer une dégradation de la qualité du collage avec le temps.

Malgré ces problèmes ces résines polyoléfine sont souvent les résines les plus utilisées pour la réalisation de réservoirs composites en raison notamment de leur coût avantageux.

Le document FR3037633A1 décrit un procédé selon l'art antérieur. Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce la bande formant la troisième couche est à base d'une résine distincte de la résine de la première couche, et en ce que, lors de l'étape de dépôt de la seconde couche intermédiaire et lors de l'étape de bobinage de la seconde bande, la seconde couche intermédiaire est maintenue à une température supérieure à la température seuil, le procédé comprenant ensuite une étape de refroidissement de la seconde couche intermédiaire à une température inférieure à la température seuil tandis que les première et troisième couches sont maintenues chacune à une température supérieure à la température de fusion de leur résine.

Par ailleurs, des modes de réalisation de l'invention peuvent comporter l'une ou plusieurs des caractéristiques suivantes :
- la première bande à base de résine polyoléfine contient des fibres de renforcement telles que des fibres de verre et/ou de carbone,
- la seconde couche a une épaisseur inférieure à l'épaisseur de la première couche,
- la bande formant la troisième couche est à base d'une résine en matériau thermoplastique,
- la bande formant la troisième couche est à base d'une résine comprenant au moins l'un des matériaux suivants : PET, PBT, PA, polymère, copolymère,
- les températures de fusion des résines deux première et troisième couches sont comprises dans un intervalle de température de 40°C,
- la température de fusion de la résine de la troisième couche est supérieure à la température de fusion de la première couche,
- la seconde couche intermédiaire comprend ou est constituée d'une feutrine,
- la seconde couche intermédiaire est constituée de l'un au moins des matériaux suivants : polyester, polyamide ou une combinaison de ces matériaux,
- la seconde couche intermédiaire est constituée d'un matériau ayant une masse par unité de surface comprise entre 50 et 800 grammes par m²
- la première couche du réservoir constitue l'enveloppe interne étanche destinée à être en contact avec le fluide à stocker dans le réservoir ou est située sur la surface externe d'une enveloppe interne étanche destinée à être en contact avec le fluide à stocker dans le réservoir.

L'invention peut concerner également tout dispositif (réservoir) ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe, schématique et partielle, illustrant un exemple de structure d'un réservoir selon l'invention,
[Fig. 2] représente une vue schématique et partielle, illustrant un exemple d'étapes du procédé de fabrication selon l'invention.

Le procédé de fabrication d'un réservoir composite de fluide sous pression comprend une étape de bobinage d'une première bande à base de résine polyoléfine pour former une première couche 2 du réservoir.

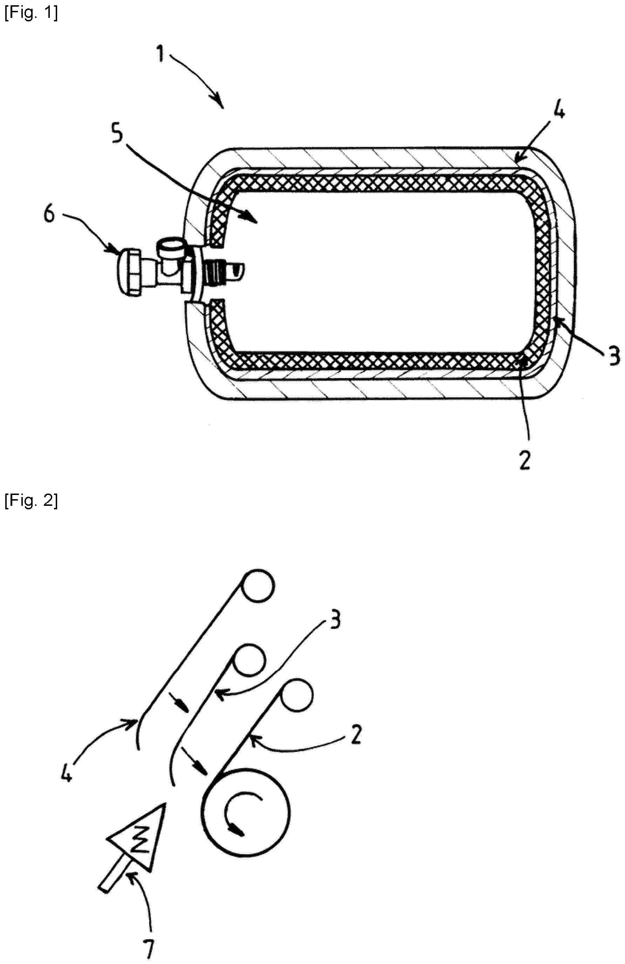

Comme illustré à la [Fig. 1], cette première couche 2 peut constituer l'enveloppe interne étanche (« liner ») destinée à être en contact avec le fluide à stocker dans le réservoir. Bien entendu cette première couche 2 peut être enroulée sur la surface externe d'une enveloppe interne étanche (« liner ») et destinée à être en contact avec le fluide à stocker dans le réservoir (volume 5 de stockage). Cette enveloppe interne étanche préconstituée peut être en matière plastique ou métallique par exemple. C'est-à-dire que le réservoir final peut être de type III ou IV ou V par exemple. Comme illustré le réservoir peut être muni d'une embase dans laquelle est montée un robinet 6.

La première bande peut être configurée pour former une couche assurant la tenue mécanique du réservoir soumis à la pression interne.

Le procédé comprend ensuite une étape de dépôt, sur la première couche 2, d'une seconde couche 3 intermédiaire constituée d'un matériau ayant des propriétés de perméabilité variable en fonction de la température et notamment une perméabilité en dessous d'une température seuil déterminée et une non-perméabilité au-dessus de la température seuil. De préférence ces états perméables/imperméables sont réversibles.

Par exemple cette seconde couche 3 intermédiaire comprend ou est constituée d'une feutrine (« breather » ou « fleece » en anglais). La seconde couche 3 intermédiaire peut notamment être constituée de l'un au moins des matériaux suivants : polyester, polyamide ou une combinaison de ces deux matériaux. La seconde couche 3 intermédiaire peut être avoir une masse par unité de surface comprise entre 50 et 800 grammes par m².

Cette seconde couche est par exemple déposée sur la première couche par application manuelle en évitant de préférence de faire des plis.

Le procédé comprend également une étape de bobinage, sur la seconde couche 3 intermédiaire, d'une seconde bande à base de résine pour former une troisième couche 4. La bande formant la troisième couche 4 étant à base d'une résine distincte de la résine de la première couche 2. La bande formant la troisième couche 4 est par exemple à base d'une résine en matériau thermoplastique, notamment comprenant au moins l'un des matériaux suivants : PET, PBT, PA, polymère, copolymère.

Lors de l'étape de dépôt de la seconde couche 3 intermédiaire et lors de l'étape de bobinage de la seconde bande, la seconde couche 3 intermédiaire est maintenue à une température supérieure à la température seuil (c'est-à-dire dans un état non perméable et notamment non perméable aux résines). Les deux couches 2, 4 à base de résine sont quant à elles chauffées ou maintenues au-dessus de leur température de fusion (par exemple via un organe 7 de chauffage).

Le procédé comprend ensuite une étape de refroidissement de la seconde couche 3 intermédiaire à une température inférieure à la température seuil (c'est-à-dire dans un état perméable aux résines) mais supérieure aux températures de fusion des résines des première 2 et troisième 4 couches.

Ceci permet de réaliser une cohésion mécanique entre des première 2 et troisième 4 couches dans la seconde 3 couche. En effet, les deux résines concernées viennent migrer dans la structure perméable ou poreuse de la seconde couche 3 intermédiaire. Lors du refroidissement ultérieur de l'ensemble, la solidification assure une cohésion et une étanchéité entre toutes les couches grâce à la seconde couche 3 intermédiaire.

Les deux bandes enroulées se comportent au final structurellement comme une même entité ou paroi.

La résine de la troisième couche 4 a de préférence une température de fusion proche de celle de la résine polyoléfine utilisée pour la première couche 2. Ceci permet la réalisation d'un d'une structure hermétique et structurellement liée du réservoir composite.

Par exemple, la température de fusion de la résine de la bande formant troisième couche 4 diffère de préférence de zéro et quarante degrés de la température de fusion de la résine de la couche formant la première couche 2 (résine polyoléfine). De préférence, la température de fusion de la résine de la bande formant troisième couche 4 est plus élevée que la température de fusion de la résine de la couche formant la première couche 2 (résine polyoléfine).

Ainsi, la seconde couche 3 intermédiaire permet une liaison entre deux bandes différentes formées de résines différentes (et pouvant avoir des fibres de renfort et de préférence les mêmes fibres de renfort).

La résine de la deuxième bande (qui sera le cas échant sur la surface extérieure du réservoir) peut être une résine thermoplastique telle que PET, PBT, PA, des copolymères de polymères. Cette couche extérieure sera ainsi plus facilement apte à être liée (collée) à des autres couches ou accessoires qu'une couche à base de résine polyoléfine.

La second 4 couche peut avoir une épaisseur inférieure à l'épaisseur de la première 2 couche.

Par exemple, l'épaisseur de la seconde couche 4 peut être comprise entre 0,3 et 1,5 mm. Cette épaisseur être uniforme sur la surface du réservoir ou peut varier sur la surface du réservoir.

Ainsi, dans un exemple possible le procédé peut se dérouler de la façon suivante :
- bobinage de la première bande pour former la première couche 2,
- application de la seconde couche 3 intermédiaire à une température supérieure à la température seuil,
- bobinage de la deuxième bande pour former la troisième couche 4,
- refroidissement en-dessous de la température seuil.

Lorsque le bobinage de la seconde bande est terminé, l'ensemble peut être refroidit de façon que le matériau de la seconde couche 3 intermédiaire retrouve ses propriétés perméables. Les résines deux autres couches 2, 4 sont encore au-dessus de leur température de fusion et peuvent ainsi migrer dans la seconde couche intermédiaire perméable. Ceci créé une entité avec très grande force de liaison qui empêche la séparation sauf à endommager totalement la paroi du réservoir.

La troisième couche 4 peut ainsi être composée de résine qui permet de se lier plus efficacement avec des colles sur sa surface extérieure.

Ce mode de fabrication peut le cas échéant être localisé sur une partie du réservoir.

Le réservoir final comprend donc une structure intégrant une seconde couche 3 intermédiaire constituée d'un matériau ayant des propriétés de perméabilité variable en fonction de la température qui est prise en sandwich entre deux couches 2, 4 respectivement une première couche 2 à base de résine polyoléfine et une troisième couche 4 à base d'une résine distincte de la résine de la première couche 2, la seconde couche 3 étant imprégnée des résines des deux autres couches.

## Revendications

1. Procédé de fabrication d'un réservoir composite de fluide sous pression comprenant une étape de bobinage d'une première bande à base de résine polyoléfine pour former une première couche (2) du réservoir, une étape de dépôt, sur la première couche (2), d'une seconde couche (3) intermédiaire constituée d'un matériau ayant des propriétés de perméabilité variable en fonction de la température et notamment une perméabilité en dessous d'une température seuil déterminée et une non-perméabilité au-dessus de la température seuil, le procédé comprenant, une étape de bobinage, sur la seconde couche (3) intermédiaire, d'une seconde bande à base de résine pour former une troisième couche (4), **caractérisé en ce que** la bande formant la troisième couche (4) est à base d'une résine distincte de la résine de la première couche (2), et **en ce que**, lors de l'étape de dépôt de la seconde couche (3) intermédiaire et lors de l'étape de bobinage de la seconde bande, la seconde couche (3) intermédiaire est maintenue à une température supérieure à la température seuil, le procédé comprenant ensuite une étape de refroidissement de la seconde couche (3) intermédiaire à une température inférieure à la température seuil tandis que les première (2) et troisième (4) couches sont maintenues chacune à une température supérieure à la température de fusion de leur résine.

2. Procédé selon la revendication 1, **caractérisé en ce que** la première bande à base de résine polyoléfine contient des fibres de renforcement telles que des fibres de verre et/ou de carbone.

3. Procédé selon la revendication 1 ou 2, **caractérisé en ce que** la seconde couche (3) intermédiaire a une épaisseur inférieure à l'épaisseur de la première couche (2).

4. Procédé selon l'une quelconque des revendications 1 à 3, **caractérisé en ce que** la bande formant la troisième couche (4) est à base d'une résine en matériau thermoplastique.

5. Procédé selon l'une quelconque des revendications 1 à 4, **caractérisé en ce que** la bande formant la troisième couche (4) est à base d'une résine comprenant au moins l'un des matériaux suivants : PET, PBT, PA..

6. Procédé selon l'une quelconque des revendications 1 à 5, **caractérisé en ce que** les températures de fusion des résines des première (2) et troisième (4) couches sont comprises dans un intervalle de température de 40°C.

7. Procédé selon l'une quelconque des revendications 1 à 6, **caractérisé en ce que** la température de fusion de la résine de la troisième (4) couche est supérieure à la température de fusion de la première (2) couche.

8. Procédé selon l'une quelconque des revendications 1 à 7, **caractérisé en ce que** la seconde couche (3) intermédiaire comprend ou est constituée d'une feutrine.

9. Procédé selon l'une quelconque des revendications 1 à 8, **caractérisé en ce que** la seconde couche (3) intermédiaire est constituée de l'un au moins des matériaux suivants : polyester, polyamide ou une combinaison de ces matériaux.

10. Procédé selon l'une quelconque des revendications 1 à 9, **caractérisé en ce que** la seconde couche (3) intermédiaire est constituée d'un matériau ayant une masse par unité de surface comprise entre 50 et 800 grammes par m².

11. Procédé selon l'une quelconque des revendications 1 à 10, **caractérisé en ce que** la première couche (2) du réservoir constitue l'enveloppe interne étanche destinée à être en contact avec le fluide à stocker dans le réservoir ou est située sur la surface externe d'une enveloppe interne étanche destinée à être en contact avec le fluide à stocker dans le réservoir.

## Patentansprüche

1. Verfahren zur Herstellung eines Verbundbehälters für unter Druck stehende Flüssigkeit, umfassend einen Schritt des Wickelns eines ersten Streifens auf Basis von Polyolefinharz, um eine erste Schicht (2) des Behälters zu bilden, einen Schritt des Aufbringens, auf die erste Schicht (2), einer zweiten Zwischenschicht (3), die aus einem Material besteht, das variable Permeabilitätseigenschafen in Abhängigkeit von der Temperatur hat und insbesondere eine Permeabilität unterhalb einer bestimmten Schwellentemperatur und eine Nicht-Permeabilität über der Schwellentemperatur, wobei das Verfahren einen Schritt des Wickelns, auf die zweite Zwischenschicht (3), eines zweiten Streifens auf Basis von Harz umfasst, um eine dritte Schicht (4) zu bilden, **dadurch gekennzeichnet, dass** der die dritte Schicht (4) bildende Streifen auf Basis eines Harzes ist, das von dem Harz der ersten Schicht (2) verschieden ist, und dadurch, dass beim Schritt des Aufbringens der zweiten Zwischenschicht (3) und beim Schritt des Wickelns des zweiten Streifens die zweite Zwischenschicht (3) auf einer Temperatur gehalten wird, die höher als die Schwellentemperatur ist, wobei das Verfahren anschließend einen Schritt des Kühlens der zweiten Zwischenschicht (3) auf eine Temperatur umfasst, die geringer als die Schwellentemperatur ist, während die ersten (2) und zweiten (4) Schichten jeweils auf einer Temperatur gehalten werden, die höher als die Schmelztemperatur ihres Harzes ist.

2. Verfahren nach Anspruch 1, **dadurch gekennzeichnet, dass** der erste Streifen auf Basis von Polyolefinharz Verstärkungsfasern wie Glas- und/oder Kohlenstofffasern enthält.

3. Verfahren nach Anspruch 1 oder 2, **dadurch gekennzeichnet, dass** die zweite Zwischenschicht (3) eine Dicke hat, die geringer als die Dicke der ersten Schicht (2) ist.

4. Verfahren nach einem der Ansprüche 1 bis 3, **dadurch gekennzeichnet, dass** der die dritte Schicht (4) bildende Streifen auf Basis eines Harzes aus thermoplastischem Material ist.

5. Verfahren nach einem der Ansprüche 1 bis 4, **dadurch gekennzeichnet, dass** der die dritte Schicht (4) bildende Streifen auf Basis eines Harzes ist, das mindestens eines der folgenden Materialien umfasst: PET, PBT, PA.

6. Verfahren nach einem der Ansprüche 1 bis 5, **dadurch gekennzeichnet, dass** die Schmelztemperaturen der Harze der ersten (2) und dritten (4) Schichten in einem Temperaturintervall von 40 °C liegen.

7. Verfahren nach einem der Ansprüche 1 bis 6, **dadurch gekennzeichnet, dass** die Schmelztemperatur des Harzes der dritten (4) Schicht höher als die Schmelztemperatur der ersten (2) Schicht ist.

8. Verfahren nach einem der Ansprüche 1 bis 7, **dadurch gekennzeichnet, dass** die zweite Zwischenschicht (3) einen Wollfilz umfasst oder daraus besteht.

9. Verfahren nach einem der Ansprüche 1 bis 8, **dadurch gekennzeichnet, dass** die zweite Zwischenschicht (3) aus mindestens einem der folgenden Materialien besteht: Polyester, Polyamid oder eine Kombination dieser Materialien.

10. Verfahren nach einem der Ansprüche 1 bis 9, **dadurch gekennzeichnet, dass** die zweite Zwischenschicht (3) aus mindestens einem Material besteht, das eine Masse je Flächeneinheit zwischen 50 und 800 Gramm je m² besitzt.

11. Verfahren nach einem der Ansprüche 1 bis 10, **dadurch gekennzeichnet, dass** die erste Schicht (2) des Behälters den dichten Innenmantel darstellt, der dazu bestimmt ist, mit der in dem Behälter gelagerten Flüssigkeit in Kontakt zu gelangen, oder auf der Außenfläche eines dichten Innenmantels gelegen ist, der dazu bestimmt ist, mit der in dem Behälter zu lagernden Flüssigkeit in Kontakt zu gelangen.

## Claims

1. Method for manufacturing a composite pressurized-fluid vessel comprising a step of winding a first polyolefin resin-based tape in order to form a first layer (2) of the vessel, a step of depositing an intermediate second layer (3) on the first layer (2), consisting of a material having variable permeability properties depending on the temperature and in particular permeability below a determined threshold temperature and non-permeability above the threshold temperature, the method comprising a step of winding a second resin-based tape on the intermediate second layer (3) in order to form a third layer (4), **characterized in that** the tape forming the third layer (4) is based on a different resin from the resin of the first layer (2) and **in that**, during the step of depositing the intermediate second layer (3) and during the step of winding the second tape, the intermediate second layer (3) is kept at a temperature above the threshold temperature, the method then comprising a step of cooling the intermediate second layer (3) to a temperature below the threshold temperature while the first (2) and third (4) layers are each kept at a temperature above the melting temperature of their resin.

2. Method according to Claim 1, **characterized in that** the first polyolefin resin-based tape contains reinforcing fibres such as glass and/or carbon fibres.

3. Method according to Claim 1 or 2, **characterized in that** the intermediate second layer (3) has a thickness smaller than the thickness of the first layer (2).

4. Method according to any one of Claims 1 to 3, **characterized in that** the tape forming the third layer (4) is based on a thermoplastic resin.

5. Method according to any one of Claims 1 to 4, **characterized in that** the tape forming the third layer (4) is based on a resin comprising at least one of the following materials: PET, PBT and PA.

6. Method according to any one of Claims 1 to 5, **characterized in that** the melting temperatures of the resins of the first (2) and third (4) layers are within a 40°C temperature range.

7. Method according to any one of Claims 1 to 6, **characterized in that** the melting temperature of the resin of the third layer (4) is above the melting temperature of the first layer (2).

8. Method according to any one of Claims 1 to 7, **characterized in that** the intermediate second layer (3) comprises or consists of a fleece.

9. Method according to any one of Claims 1 to 8, **characterized in that** the intermediate second layer (3) consists of at least one of the following materials: polyester, polyamide or a combination of these materials.

10. Method according to any one of Claims 1 to 9, **characterized in that** the intermediate second layer (3) consists of a material having a weight per unit area of between 50 and 800 grammes per m².

11. Method according to any one of Claims 1 to 10, **characterized in that** the first layer (2) of the vessel forms the sealed liner intended to be in contact with the fluid to be stored in the vessel or is situated on the outer surface of a sealed liner intended to be in contact with the fluid to be stored in the vessel.
